# EUROPÄISCHE PATENTSCHRIFT

(11) **EP 2 411 710 B1**
(45) Veröffentlichungstag und Bekanntmachung des Hinweises auf die Patenterteilung: **15.10.2014**
(21) Anmeldenummer: 10718838.5
(22) Anmeldetag: 08.02.2010
(51) Int. Cl.: F16J 15/08

(54) **FLACHDICHTUNG**
FLAT SEAL
GARNITURE PLATE

(30) Priorität: 27.03.2009 DE 102009015403
(43) Veröffentlichungstag der Anmeldung: 01.02.2012
(73) Patentinhaber: Federal-Mogul Sealing Systems GmbH, 57562 Herdorf (DE)
(72) Erfinder: KÖHLER, Hubert, 57518 Betzdorf (DE); STETTER, Jürgen, 65589 Hadamar-Steinbach (DE); DESPRAT, Pierre-Xavier, 75008 Paris (FR)
(74) Vertreter: Döpp, Ludger
(86) Internationale Anmeldenummer: PCT/DE2010/000145
(87) Internationale Veröffentlichungsnummer: WO 2010/108465

(56) Entgegenhaltungen:
- US-A- 4 648 607
- US-A- 5 141 237
- US-A1- 2008 164 661

## Beschreibung

Die Erfindung betrifft eine mehrlagige Flachdichtung gemäß gattungsbildendem Teil des ersten Patentanspruchs.

Vielfach werden dreilagige Dichtungen benötigt, die aus zwei verschiedenen Lagen zusammengebaut werden. In der Regel sind hierbei die äußeren Decklagen hinsichtlich ihres Lochbildes sowie der Sicken identisch. Nach der Montage ist die, bedarfsweise von den Decklagen abweichende Strukturen aufweisende, mittlere Lage dann nicht mehr sichtbar und es ist nicht mehr möglich, visuell den richtigen Lagenaufbau festzustellen.

Wenn zum Beispiel eine Sicke in jede Lage eingebracht ist, sollen dieselben von Lage zu Lage jeweils entgegengesetzt ausgerichtet werden. Werden die Lagen jedoch falsch montiert, kann es beispielsweise zu einer Anordnung der Sicken kommen, die dann ineinander geschachtelt sind. Die Funktion dieser Flachdichtung ist dann nicht mehr gegeben.

Die US 5,141,237 offenbart eine aus mehreren Stahllagen gebildete Flachdichtung, wie sie beispielsweise als Zylinderkopfdichtung zwischen einem Brennkopf und einem Motorblock zum Einsatz gelangen kann. Die Flachdichtung ist mehrlagig ausgebildet und beinhaltet unterschiedlich ausgebildete Erkennungslöcher, die insbesondere an den Randbereichen der Dichtung vorgesehen werden.

Auch wenn hier bereits optisch unterschiedliche Erkennungshilfen der einzelnen Lagen angesprochen werden, so ist diese Art der Ausbildung dennoch nicht zwangsläufig geeignet, um stets die korrekte Positionierung der Lagen zueinander sicher zu stellen.

Der US 4,648,607 ist eine Flachdichtung zu entnehmen, beinhaltend eine Vielzahl dünner Stahlplatten, die übereinander gestapelt werden. In den Randbereichen der einzelnen Stahlplatten, in welchen keine Dichtfunktion notwendig ist, sind Identifizierungsmerkmale vorgesehen.

Eine gattungsbildende mehrlagige Flachdichtung ist der US 2008/0164661 A1 zu entnehmen.

Der Erfindung liegt die Aufgabe zugrunde, eine mehrlagige Flachdichtung bereit zu stellen, bei welcher stets eine einwandfreie Montage der einzelnen Lagen zueinander gegeben ist. Durch diese Maßnahme soll eine Reduzierung der Ausschussquote herbeigeführt werden.

Diese Aufgabe wird dadurch gelöst, dass sich bei der Montage der einzelnen Lagen ein von den Erkennungslöchem, respektive der Erkennungshilfe, geometrisch unterscheidendes Durchgangsloch ergibt.

Vorteilhafte Weiterbildungen des Erfindungsgegenstandes sind den Unteransprüchen zu entnehmen.

Dadurch, dass in den beiden äußeren Decklagen ein von der mittleren Lage abweichendes optisches Kennzeichen gegeben ist, ergeben sich durch die Überlagerung der jeweiligen Erkennungslöcher in Verbindung mit der zugehörigen Erkennungshilfe geometrisch voneinander abweichende Kennzeichen (Durchgangsloch).

Das erste optische Kennzeichen ist, dass durch die Überlagerung der jeweiligen Erkennungslöcher/Erkennungshilfen ein geometrisch andersartiges Durchgangsloch gebildet wird, welches durch alle Lagen hindurch sichtbar ist. Dieses zeigt an, ob verschiedene Lagen montiert wurden.

Das zweite optische Kennzeichen ergibt sich aus der Überdeckung der Deck- und Mittellage und zwar von beiden Decklagen aus betrachtet. Bei der korrekten Reihenfolge der Lagen sieht man durch die Enden der Erkennungslöcher neben dem Durchgangsloch auf die mittlere Lage. Der richtige Lagenaufbau ist dadurch gekennzeichnet, dass die Enden der Erkennungslöcher in den Decklagen zu der selben Richtung weisen. Zeigen diese in zwei verschiedene Richtungen, kennzeichnet dies einen falschen Lagenaufbau.

Prinzipiell sind zwar alle geometrischen Formen denkbar, wobei bevorzugt als Geometrien für die Erkennungslöcher, respektive die zugehörigen Erkennungshilfen, sich Langlöcher, Dreiecke und Rechtecke anbieten.

Die erfindungsgemäße Flachdichtung kann bevorzugt als Zylinderkopfdichtung im Bereich einer Brennkraftmaschine oder als Nebendichtung, beispielsweise im Bereich eines Turboladers, eingesetzt werden.

Der Erfindungsgegenstand ist anhand eines Ausführungsbeispiels in der Zeichnung dargestellt und wird wie folgt beschrieben. Es zeigen:
- Figur 1: Prinzipskizze einer dreilagigen Flachdichtung;
- Figuren 2 bis 5: unterschiedliche Ausgestaltungsformen von Erkennungslöchern und Erkennungshilfen.

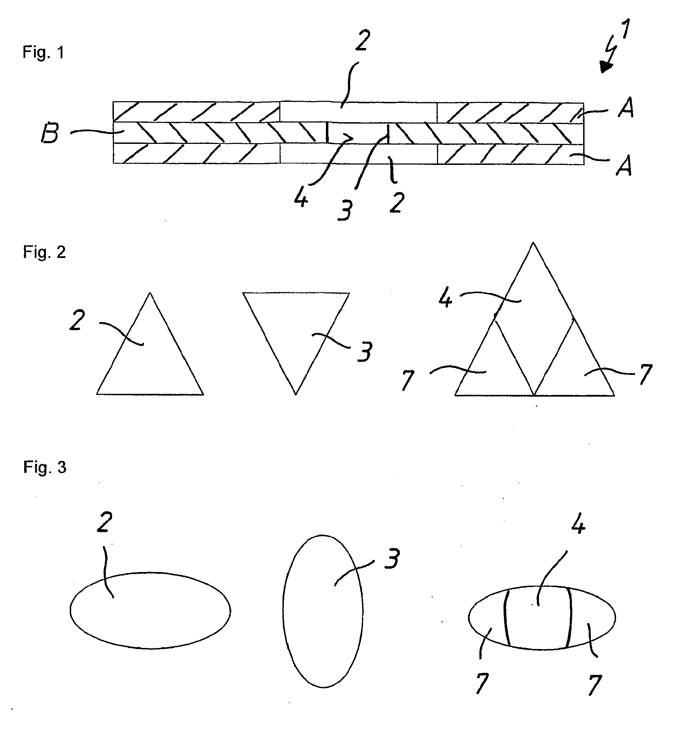

Figur 1 zeigt den prinzipiellen Aufbau einer dreilagigen Flachdichtung 1, die beispielsweise als Zylinderkopfdichtung zwischen Zylinderkopf und Motorblock einer Brennkraftmaschine eingesetzt werden kann. Die Flachdichtung 1 besteht aus zwei identischen metallischen Decklagen A sowie einer andere Strukturen aufweisenden zwischen den Decklagen A angeordneten weiteren metallischen Lage B. Die einzelnen Lagen A, B sind üblicherweise, was Durchgangslöcher, Medienlöcher oder dergleichen angeht, identisch aufgebaut. Sie können sich jedoch darin unterscheiden, dass sie an unterschiedlichen Stellen ihrer Erstreckung mit unterschiedlich ausgestalteten Sicken oder dergleichen ausgebildet sein können. Da selbige für das optische Auge nur schwer zu erkennen sind, kommt es immer wieder vor, dass die Lagen A, B falsch montiert werden und somit für den Einsatzfall ungeeignet sind.

Um hier eine eindeutigere Zuordnung für einen reibungslosen Montageablauf sicherzustellen, sind die Lagen A mit gleichen geometrischen Erkennungslöchern 2 ausgestattet, die auch von ihrer Anordnung, d. h. vom Richtungsverlauf her, gleich sind.

Die zwischen den Lagen A angeordnete Lage B weist eine zu diesen Erkennungslöchern 2 versetzte optische Erkennungshilfe 3 auf.

Nach der Montage dieser Flachdichtung 1 kann nun der Betrachter sehr schnell erkennen, dass, sofern die Erkennungslöcher in gleicher Richtung verlaufen und sich durch Überlappung der Erkennungslöcher 2 mit der Erkennungshilfe 3 eine andersartige geometrische Form eines Durchgangslochs 4 ergibt, eine korrekte Montage der einzelnen Lagen A, B erreicht wurde. Die beiden optischen Kennzeichen 2,3 lassen somit zu einhundert Prozent die richtige bzw. falsche Anordnung der Lagen A,B erkennen.

Die Figuren 2 bis 5 zeigen unterschiedliche geometrische Formen zur Erzeugung von Erkennungslöchern 2 sowie die dazugehörigen zu den Erkennungslöchern 2 versetzt bzw. gespiegelt ausgebildeten optischen Erkennungshilfen 3. In gleicher Weise sind die sich ergebenden Durchgangslöcher 4 erkennbar, die sich aus der Überlappung der Erkennungslöcher 2 mit der jeweiligen Erkennungshilfe 3 ergeben.

In Figur 2 kommen als Erkennungslöcher 2, respektive Erkennungshilfe 3, zwei gespiegelt zueinander angeordnete Dreiecke zum Einsatz, die nach deren Überlappung als Durchgangsloch 4 die Querschnittsform eine Rombus ergeben.

In Figur 3 kommen zwei 90° zueinander versetzt angeordnete Ellipsen 2,3 zum Einsatz, die das im rechten Bild der Figur 3 gezeigte Durchgangsloch 4 ergeben.

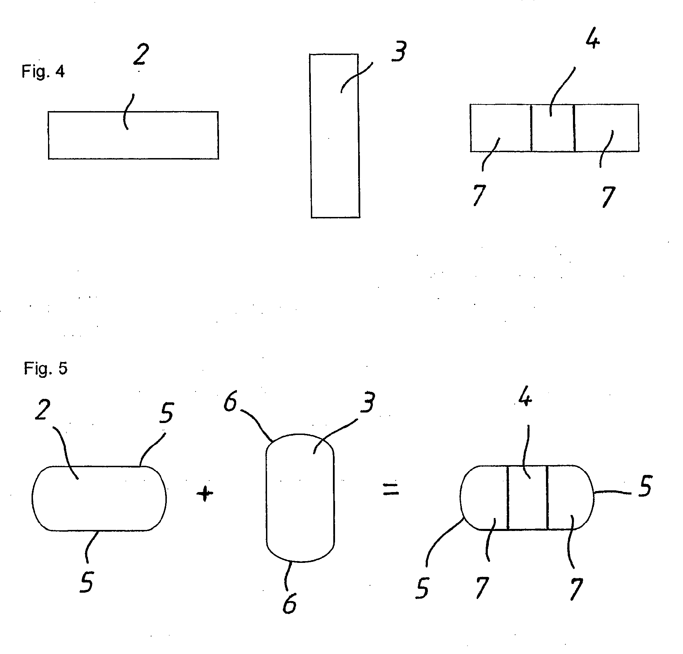

Bei den Figuren 4 und 5 kommen rechteckig ausgebildete 90° zueinander versetzte Erkennungslöcher 2, respektive Erkennungshilfen 3, zur Anwendung, wobei bei Überlappung derselben sich etwa quadratische Durchgangslöcher 4 ergeben. Die Figuren 4 und 5 unterscheiden sich durch die Länge der Erkennungslöcher 2 und Erkennungshilfen 3 und dadurch, dass die Erkennungslöcher 2/Erkennungshilfe 3 gerundete Endbereiche 5,6 aufweisen.

Ebenso sind die Enden 7 der Erkennungslöcher 2 erkennbar, welche sich aus der Überdeckung der Deck- A und Mittellage B, und zwar von den Decklagen A betrachtet, ergeben.

Somit sind für den lagenmäßigen Aufbau der Flachdichtung 1 stets zwei optisch voneinander getrennte Kennzeichen gegeben. Für die in Figur 4 und 5 verwendete Geometrie ergeben sich beide Kennzeichen wie folgt:
Das erste optische Kennzeichen ist das Durchgangsloch 4, welches durch alle drei Lagen A, B hindurch sichtbar ist. Dieses zeigt an, ob verschiedene Lagen A,B montiert wurden. Wurden unterschiedliche Lagen A und B montiert, so ergibt sich das in den Figuren 4 und 5 erkennbare Quadrat als Durchgangsloch 4. Allerdings sagt dies noch nichts über die richtige Reihenfolge der Lagen A,B aus. Wurden beispielsweise nur Lagen A oder nur Lagen B montiert, so ergibt sich ein Langloch als Durchgangsloch 4.

Das zweite optische Kennzeichen ergibt sich aus der Überdeckung der Lagen A,B und zwar von beiden Lagen A aus betrachtet. Bei der korrekten Reihenfolge der Lagen A,B sieht man durch die Enden der Langlöcher 2,3 neben dem Durchgangsloch 4 auf die mittlere Lage B. Der richtige Lagenaufbau wird dadurch erkennbar, dass bei Verwendung von Langlöchern als Durchgangslöcher 2 die Enden derselben in den Lagen A zu der selben Richtung zeigen. Zeigen diese in zwei verschiedene Richtungen ist ein falscher Lagenaufbau gegeben.

Bei der Geometrie eines Dreiecks besteht das zweite optische Kennzeichen aus zwei kleinen Dreiecken 7, die bei richtiger Lagenanordnung in dieselbe Richtung zeigen.

Bei den Figuren 3,4,5 zeigt die sich aus der Überdeckung ergebende Kontur 7 bei richtiger Lagenanordnung in dieselbe Richtung und ist bei falscher Lagenanordnung um 90° versetzt.

## Patentansprüche

1. Mehrlagige Flachdichtung, bei der zwei Lagen (A) als äußere Decklagen ausgebildet sind, die mindestens eine weitere Lage (B) zwischen sich aufnehmen, wobei die Decklagen (A) mit Erkennungslöchern (2) gleicher geometrischer Kontur und Ausrichtung versehen sind und die mittlere Lage (B) eine dazu versetzte Erkennungshilfe (3) beinhaltet, **dadurch gekennzeichnet, dass** sich bei der Montage der einzelnen Lagen (A,B) ein von den Erkennungslöchern (2), respektive der Erkennungshilfe (3), geometrisch unterscheidendes Durchgangsloch (4) ergibt.

2. Flachdichtung nach Anspruch 1, **dadurch gekennzeichnet, dass** das jeweilige Erkennungsloch (2), respektive die Erkennungshilfe (3), als Langloch ausgebildet ist, das einen rechteckigen Querschnitt aufweist.

3. Flachdichtung nach Anspruch 1, **dadurch gekennzeichnet, dass** das jeweilige Erkennungsloch (2), respektive die Erkennungshilfe (3), als Ellipse ausgebildet ist.

4. Flachdichtung nach Anspruch 1, **dadurch gekennzeichnet, dass** das jeweilige Erkennungsloch (2), respektive die Erkennungshilfe (3), als Dreieck ausgebildet ist.

5. Flachdichtung nach einem der Ansprüche 1 bis 3, **dadurch gekennzeichnet, dass** die Erkennungshilfe (3) um 90° versetzt zum jeweiligen Erkennungsloch (2) in der mittleren Lage (B) eingebracht ist.

6. Flachdichtung nach Anspruch 1 oder 4, **dadurch gekennzeichnet, dass** die Erkennungshilfe (4) um 180° versetzt zum Erkennungsloch (2) in der mittleren Lage (B) eingebracht ist.

7. Flachdichtung nach einem der Ansprüche 1 bis 6, **dadurch gekennzeichnet, dass** mindestens eine der Lagen (A,B) als metallische Lage ausgebildet ist.

8. Flachdichtung nach einem der Ansprüche 1 bis 7, einsetzbar als Zylinderkopfdichtung in einer Brennkraftmaschine.

9. Flachdichtung nach einem der Ansprüche 1 bis 7, einsetzbar als Nebendichtung zwischen einem Turbotader und einem Katalysator.

## Claims

1. A multilayer flat seal, in which two layers (A) are outer top layers which at least receive one other layer (B) between them, wherein the top layers (A) are provided with sight holes (2) having the same geometric contour and orientation and the intermediate layer (B) comprises a sight aid (3) that is offset with respect to said sight holes, **characterized in that** during the assembly of the individual layers (A, B) a through hole (4) is formed that is geometrically different from the sight holes (2) respectively the sight aid (3).

2. A flat seal according to claim 1, **characterized in that** the respective sight hole (2), respectively the sight aid (3), is designed as an oblong hole having a rectangular cross section.

3. A flat seal according to claim 1, **characterized in that** the respective sight hole (2), respectively the sight aid (3), is designed as an ellipse.

4. A flat seal according to claim 1, **characterized in that** the respective sight hole (2), respectively the sight aid (3), is designed as a triangle.

5. A flat seal according to one of the claims 1 through 3, **characterized in that** the sight aid (3) is introduced in the intermediate layer (B) while being offset by 90° with respect to the respective sight hole (2).

6. A flat seal according to claim 1 or 4, **characterized in that** the sight aid (3) is introduced in the intermediate layer (B) while being offset by 180° with respect to the sight hole (2).

7. A flat seal according to one of the claims 1 through 6, **characterized in that** at least one of the layers (A, B) is a metallic layer.

8. A flat seal according to one of the claims 1 through 7, usable as a cylinder head gasket in an internal combustion engine.

9. A flat seal according to one of the claims 1 through 7, usable as an auxiliary seal between a turbo charger and a catalyst.

## Revendications

1. Garniture plate à plusieurs couches, dans laquelle deux couches (A) sont des couches supérieures extérieures qui reçoivent entre elles au moins une autre couche (B), les couches supérieures (A) étant munies de trous de vision (2) ayant le même contour géométrique et la même orientation et la couche intermédiaire (B) comprenant une aide de vision (3) qui est décalée par rapport aux trous de vision, **caractérisée en ce qu'**un trou de passage (4) qui est géométriquement différent des trous de vision (2) respectivement de l'aide de vision (3) se forme au cours du montage des couches individuelles (A, B).

2. Garniture plate selon la revendication 1, **caractérisée en ce que** le trou de vision respectif (2), respectivement l'aide de vision (3), est configuré comme un trou oblong qui comprend une section transversale rectangulaire.

3. Garniture plate selon la revendication 1, **caractérisée en ce que** le trou de vision respectif (2), respectivement l'aide de vision (3), est configuré comme une ellipse.

4. Garniture plate selon la revendication 1, **caractérisée en ce que** le trou de vision respectif (2), respectivement l'aide de vision (3), est configuré comme un triangle.

5. Garniture plate selon l'une des revendications 1 à 3, **caractérisée en ce que** l'aide de vision (3) est introduite dans la couche intermédiaire (B) en étant décalée de 90° par rapport au trou de vision (2) respectif.

6. Garniture plate selon la revendication 1 ou la revendication 4, **caractérisée en ce que** l'aide de vision (3) est introduite dans la couche intermédiaire (B) en étant décalée de 180° par rapport au trou de vision (2).

7. Garniture plate selon l'une des revendications 1 à 6, **caractérisée en ce qu'**au moins une des couches (A, B) est une couche métallique.

8. Garniture plate selon l'une des revendications 1 à 7, utilisable en tant que joint de culasse de cylindre dans un moteur à combustion interne.

9. Garniture plate selon l'une des revendications 1 à 7, utilisable en tant que joint auxiliaire entre un turbo-compresseur et un catalyseur.
